# EUROPÄISCHE PATENTSCHRIFT

(11) **EP 1 419 413 B1**
(45) Veröffentlichungstag und Bekanntmachung des Hinweises auf die Patenterteilung: **15.12.2004**
(21) Anmeldenummer: 02796186.1
(22) Anmeldetag: 20.08.2002
(51) Int. Cl.: G02C 7/02

(54) **OPTISCHE LINSE ODER GLAS MIT EINER KENNZEICHNUNG UND/ODER MARKIERUNG AUF DER VORDER- UND/ODER RÜCKFLÄCHE**
OPTICAL LENS OR GLASS WITH AN IDENTIFICATION AND/OR MARKING ON THE FRONT AND/OR REAR SURFACE
LENTILLE OU VERRE OPTIQUE POURVU D'UNE IDENTIFICATION OU D'UN MARQUAGE SUR LA FACE AVANT OU ARRIERE

(30) Priorität: 21.08.2001 DE 10139971
(43) Veröffentlichungstag der Anmeldung: 19.05.2004
(73) Patentinhaber: Rodenstock GmbH, 80469 München (DE)
(72) Erfinder: DORSCH, Rainer, DE-81477 München (DE)
(74) Vertreter: Müller-Boré & Partner Patentanwälte
(86) Internationale Anmeldenummer: PCT/DE2002/003099
(87) Internationale Veröffentlichungsnummer: WO 2003/019268

(56) Entgegenhaltungen:
- EP-A- 0 031 633
- EP-A- 0 103 217
- EP-A- 0 307 874
- EP-A- 0 952 476
- EP-A- 1 158 339
- FR-A- 2 513 771
- US-A- 5 467 149
- US-A- 5 936 704

## Beschreibung

### Technisches Gebiet

Die Erfindung bezieht sich auf eine optische Linse oder Glas mit einer Kennzeichnung und/oder Markierung auf der Vorder- und/oder Rückfläche, die bei allen Lichtbedingungen unmittelbar sichtbar ist.

Optische Gläser, wie Brillenlinse oder Uhrgläser, weisen meistens eine Kennzeichnung aus, die den Glashersteller bezeichnet. Dieses Merkmal ist sehr wichtig, weil man anhand der Betrachtung der Gläser erkennen soll, daß es sich um ein Markenprodukt oder ein authentisches Produkt handelt, bzw. der Glashersteller soll unmittelbar sichtbar sein.
Man kann daraus ableiten, daß derartige Kennzeichnungen auf den obengenannten Gläsern in dauerhafter Form angebracht werden müssen, ohne die optische Eigenschaften des Glases zu verändern.

### Stand der Technik

Für das Anbringen von Kennzeichnungen sind die verschiedensten Verfahren bekannt. Prinzipiell unterscheidet man zwischen Verfahren, bei denen Farbstoffe und insbesondere Fluoreszenzfarbstoffe auf die Oberfläche aufgebracht bzw. in die Oberfläche eingebracht werden, und Verfahren bei denen Gravuren oder dgl. in die Oberfläche eingebracht werden, also die optische Oberfläche mit einer kleinen Vertiefung etc. versehen wird.

Bei Verfahren, bei denen Gravuren in die Oberfläche eingebracht werden, unterscheidet man zwischen berührenden und kontaktlosen Verfahren. Während die berührenden Verfahren in der Regel mit feinen mechanischen Methoden ausgeführt werden, wie bei der Verwendung eines Stichels, benutzt man bei den kontaktlosen Verfahren die Wechselwirkung von Licht mit der zu kennzeichnenden Oberfläche oder einer auf die Oberfläche (vorübergehend) aufgebrachten - die Wechselwirkung hervorrufenden bzw. verstärkenden - Schicht, die eine besonders gute Wechselwirkung mit dem eingestrahlten Licht hat.
In beiden Fälle handelt es sich um teuere Verfahren, die eine sorgfältige Behandlung der Glasoberfläche bzw. eine Komplexe Vorrichtung benötigen.

Sogenannte Hauchzeichen sind bekannt, wobei zur Kennzeichnung und/oder Markierung des optisches Glases verschiedene Substanzen, die eine unterschiedliche Benetzbarkeit mit der Glasoberfläche aufweisen, mit einem Stempel in der Form der Kennzeichnung und/oder Markierung, angebracht werden. Derartige Kennzeichnungen und/oder Markierungen besitzen den Nachteil, daß sie nur für kurze Zeit haltbar sind, darüber hinaus ist das ganze Verfahren sehr aufwendig.

Ein ebenfalls bekanntes Verfahren stellt Kennzeichnungen und/oder Markierungen auf der Glasoberfläche her, mit Hilfe von Masken oder Schablonen, die eine Blende in Form der Kennzeichnung und/oder Markierung aufweisen. Die geeignete Substanz wird durch die Blende aufgedampft, damit auf der Glasoberfläche die Kennzeichnung und/oder Markierung erzeugt wird. Das Glas, das mit so einem Verfahren behandelt wird, zeigt aber eine Kennzeichnung, die nicht richtig randscharf ist, auf Grund des wenn auch geringen Abstandes zwischen Linse und Schablone.

Aus der EP-B1-0 103 217 ist weiter eine Brillenlinse mit einer reflexvermindernden Schicht bekannt, wobei die Kennzeichnung und/oder Markierung in Form von mindestens einem aus der reflexvermindernden Schicht ausgesparten Bereich enthalten ist. In dem für die Kennzeichnung und/oder Markierung auszusparenden Bereich wird eine abwischbar haftende Substanz aufgebracht, die zu einem späteren Zeitpunkt einschließlich der auf sie aufgedampften reflexvermindernden Schicht abgewischt wird.
Die Nachteile dieses Verfahrens sind die beschränkende Anwendung nur für Linsen, die reflexvermindernden Schichten auftreten und zusätzlich das wegen der großen Stückzahlen aufwendige Aufbringen der abwischbar haftenden Substanz.

Eine ähnliche Linse ist auch in EP-B1-0 307 874 beschrieben, wobei zur Erzeugung der Kennzeichnung und/oder Markierung die Maskenbeschriftung durch Excimer-Laser verwendet wird. Mittels eines Excimer-Lasers wird eine Maske bestrahlt, welche die Form der Kennzeichnung und/oder Markierung als Aussparung enthält, und diese wird auf die Oberfläche der Brillenlinse abgebildet.

Das Verfahren weist die Nachteile auf, daß es sehr teuer ist und daß bei der Maskenbeschriftung die meiste Laserenergie an der Maske ungenutzt reflektiert oder in Wärme umgewandelt wird.
Außerdem ist die mit diesem Verfahren gravierte Kennzeichnung und/oder Markierung nur im reflektierten Licht sichtbar.

### Darstellung der Erfindung

Der Erfindung liegt die Aufgabe zugrunde, eine optische Linse oder Glas zu herstellen, deren Kennzeichnung und/oder Markierung unmittelbar sichtbar ist, um die Erkennung des Markenproduktes, welches die Anforderungen der Qualität entspricht, bei allen Lichtbedingungen zu ermöglichen.

Eine erfindungsgemäße Lösung dieser Aufgabe ist für eine optische Linse oder Glas im Patentanspruch 1 angegeben. Verfahren zur Herstellung dieser Linse oder Glas ist Gegenstand der Ansprüche 8 folgende.

Die erfindungsgemäße Linse oder Glas mit einer Kennzeichnung und/oder Markierung auf der Vorder- und/oder Rückfläche, zeichnet sich durch eine Kennzeichnung und/oder Markierung aus, die aus einem Vielzahl von Elementen besteht, von denen jedes eine spektrale Zerlegung sowohl des einfallenden als auch des reflektierten Lichts verursacht.

Um die obengenannte Kennzeichnung und/oder Markierung unmittelbar sichtbar zu erzeugen ohne daß sie, in dem Bereich der Glasoberfläche, wo sie aufgebracht ist, die optische Eigenschaften des Glases verändert, wird sie als transparent hergestellt.
Zur Erzeugung dieses Merkmales sind die Elemente, aus denen die Kennzeichnung und/oder Markierung zusammengesetzt ist, regelmäßige Körper, wie z.B. Prismen, die aus transparenten Flächen bestehen. Diese Körper verursachen, aus verschiedenen Blickwinkeln, eine spektrale Zerlegung des Lichts und somit verleihen sie der Kennzeichnung und/oder Markierung ein unmittelbar sichtbares und unverwechselbares Aussehen.

Der Vorteil, daß die Kennzeichnung und/oder Markierung äußerlich sichtbar ist, ohne daß sie eine Veränderung der Eigenschaften des Glases verursacht, was z.B. sowohl für Uhr- als auch für Brillengläser sehr wichtig ist, wird garantiert, wenn der Bereich, auf dem die Kennzeichnung und/oder Markierung aufgebracht ist, eine Fläche von 2.00 cm² nicht überschreitet.

Bei einem erfindungsgemäßen Verfahren zur Herstellung dieser Linse oder Glas ist das Gießen eines insbesondere polymerisierbaren Materials in eine Gießform vorgesehen, wobei die Gießform wenigstens eine Gießfläche zur Herstellung der entsprechenden optischen Fläche der Linse aufweist. Das Verfahren zeichnet sich dadurch aus, daß die Gießfläche Ausnehmungen bzw. Erhebungen aufweist, die komplementär zu den Elementen sind, aus denen die Markierung und/oder Kennzeichnung zusammengesetzt ist.

Die großen Vorteile dieses Verfahrens liegen in der Verwendung einer schnellen Prozedur, womit die sorgfältige und aufwendige Gravur der Glasoberfläche vermieden ist. Durch die Benutzung einer Gießform gibt es auch die Vorteilhafte Möglichkeit eine besseren Reproduzierbarkeit im Herstellen der Kennzeichnungen und/oder Markierungen zu erreichen.

Die Ausnehmungen bzw. Erhebungen der Gießfläche sind normalerweise eingefräst oder durch Gravur eingebracht, was den Vorteil aufweist, daß eine schnelle aber trotzdem feine Verarbeitung der Gießform ermöglicht ist. Die geringe Stückzahl die eine Gravur oder das Fräsen einer Gießform benötigen, bezeichnen weiterhin ein Verfahren das billig ist.

## Patentansprüche

1. Optische Linse oder Glas mit einer Kennzeichnung und/oder Markierung auf der Vorder- und/oder Rückfläche,
**dadurch gekennzeichnet, daß** die Kennzeichnung und/oder Markierung aus einer Vielzahl von Elementen besteht, von denen jedes eine spektrale Zerlegung sowohl des einfallenden als auch des reflektierten Lichts verursacht und wobei die Elemente regelmäßige Körper sind, die aus wenigstens zwei Flächen bestehen.

2. Linse nach Anspruch 1,
**dadurch gekennzeichnet, daß** die Kennzeichnung und/oder Markierung transparent ist.

3. Linse nach Anspruch 1 oder 2,
**dadurch gekennzeichnet, daß** die Elemente Prismen sind.

4. Linse nach einem der Ansprüche 1 bis 3,
**dadurch gekennzeichnet, daß** die Flächen der regelmäßigen Körper transparent sind.

5. Linse nach einem der Ansprüche 1 bis 4,
**dadurch gekennzeichnet, daß** der Bereich, auf dem die Kennzeichnung und/oder Markierung aufgebracht ist, eine Fläche von 2,00 cm² nicht überschreitet.

6. Linse nach einem der Ansprüche 1 bis 5,
**dadurch gekennzeichnet, daß** die Linse ein Brillenglas ist.

7. Verfahren zur Herstellung von Linsen, wie Brillen- oder Uhrgläser nach einem der Ansprüche 1 bis 6, durch Gießen eines insbesondere polymerisierbaren Materials in eine Gießform, die wenigstens eine Gießfläche zur Herstellung der entsprechenden optischen Fläche der Linse aufweist,
**dadurch gekennzeichnet, daß** die Gießfläche Ausnehmungen bzw. Erhebungen aufweist, die komplementär zu den Elementen sind, aus denen die Markierung und/oder Kennzeichnung zusammengesetzt ist.

8. Verfahren nach Anspruch 7,
**dadurch gekennzeichnet, daß** in die Gießfläche die komplementären Ausnehmungen eingefräst oder durch Gravieren eingebracht sind.

## Claims

1. Optical lens or glass which has an identification and/or marking on the front surface and/or rear surface, **characterised in that** the identification and/or marking comprises a plurality of elements, each of which causes a spectral dispersion both of the incident light and of the reflected light, the elements being regular bodies which comprise at least two surfaces.

2. Lens according to claim 1, **characterised in that** the identification and/or marking is transparent.

3. Lens according to claim 1 or 2, **characterised in that** the elements are prisms.

4. Lens according to one of claims 1 to 3, **characterised in that** the surfaces of the regular bodies are transparent.

5. Lens according to one of claims 1 to 4, **characterised in that** the region on which the identification and/or marking is applied does not exceed an area of 2.00 cm².

6. Lens according to one of claims 1 to 5, **characterised in that** the lens is a spectacle glass.

7. Method for manufacturing lenses, such as spectacle or watch glasses according to one of claims 1 to 6, by pouring an especially polymerisable material into a casting mould, which has at least one casting surface to produce the corresponding optical surface of the lens, **characterised in that** the casting surface has depressions or raised portions which are complementary to the elements of which the marking and/or identification is composed.

8. Method according to claim 7, **characterised in that** the complementary depressions are milled into the casting surface or are introduced by engraving.

## Revendications

1. Lentille optique ou verre avec une identification et/ou une marque à la face avant et/ou arrière,
**caractérisée en ce que** l'identification et/ou la marque consiste en une multitude d'éléments, dont chacun provoque une décomposition spectrale aussi bien de la lumière incidente que de la lumière réfléchie, sachant que les éléments sont des corps réguliers qui consistent en au moins deux surfaces.

2. Lentille selon la revendication 1,
**caractérisée en ce que** l'identification et/ou la marque sont transparentes.

3. Lentille selon la revendication 1 ou 2,
**caractérisée en ce que** les éléments sont des prismes.

4. Lentille selon l'une quelconque des revendications 1 à 3,
**caractérisée en ce que** les surfaces des corps réguliers sont transparentes.

5. Lentille selon l'une quelconque des revendications 1 à 4,
**caractérisée en ce que** la zone sur laquelle l'identification et/ou la marque est apposée ne dépasse pas une surface de 2,00 cm².

6. Lentille selon l'une quelconque des revendications 1 à 5,
**caractérisée en ce que** la lentille est un verre à lunette.

7. Procédé de fabrication de lentilles, telles des verres à lunette ou des verres de montre, selon l'une quelconque des revendications 1 à 6, par coulée d'un matériau, en particulier polymérisable, dans un moule de coulée qui comporte au moins une surface de coulée pour la fabrication de la surface optique correspondante de la lentille,
**caractérisé en ce que** la surface de coulée comporte des évidements, respectivement des élévations, qui sont complémentaires aux éléments dont est composée l'identification et/ou la marque.

8. Procédé selon la revendication 7,
**caractérisé en ce que** les évidements complémentaires sont fraisés dans la surface de coulée ou y sont pratiqués par gravure.
